Europäisches Patentamt

European Patent Office

Office européen des brevets

(19)

(11) Veröffentlichungsnummer: **0 134 280**
**A1**

(12) # EUROPÄISCHE PATENTANMELDUNG

(21) Anmeldenummer: 83108474.4

(22) Anmeldetag: 29.08.83

(51) Int. Cl.⁴: **G 11 B 23/02**

(43) Veröffentlichungstag der Anmeldung:
20.03.85 Patentblatt 85/12

(84) Benannte Vertragsstaaten:
AT BE CH DE FR GB IT LI NL SE

(71) Anmelder: **idn inventions and development of novelties ag**
**Hartbertstrasse 9**
**CH-7002 Chur(CH)**

(72) Erfinder: **Ackeret, Peter**
**Allmendstrasse 18**
**CH-8700 Küsnacht(CH)**

(74) Vertreter: **Dipl.-Ing. H. Marsch Dipl.-Ing. K. Sparing**
**Dipl.-Phys.Dr. W.H. Röhl Patentanwälte**
**Rethelstrasse 123**
**D-4000 Düsseldorf(DE)**

(54) **Magazin für Tonaufzeichnungsträger.**

(57) Das Magazin umfasst eine Baugruppe aus einem ein- oder mehrteiligen Gehäuse (100), aus dem Schieber (102) zur Aufnahme von Magnetbandkassetten oder Schallplatten ausfahrbar sind. Ein Rahmen (104) umgibt mit Abstand diese Baugruppe, und der frontseitige Spalt zwischen beiden ist von einer Polsterkrone (112) verschlossen. Der Rahmen (104) ist verdrehbar in einem Bügel (124) gelagert, der losreissbar in einem im Fahrzeuginnern befestigbaren Fuss (127) sitzt.

EP 0 134 280 A1

./...

Fig. 1

Magazin für Tonaufzeichnungsträger

—————————————————————————————————————————————

Die Erfindung betrifft ein Magazin für Tonaufzeichnungsträger mit den im Oberbegriff des Patentanspruchs 1 genannten Merkmalen. Derartige Magazine sind marktgängig.

Die bekannten Magazine weisen einen an der Rückseite des Gehäuses angebrachten Deckel auf, der mit Einstecköffnungen versehen ist. In diese ist ein Verbindungsstück einrastbar, das seinerseits an einen Fuss angelenkt ist. Je nachdem, welche Einstecköffnung gewählt wird, ist das Magazin in unterschiedlichen Positionen in einem Fahrzeug montierbar, indem der Fuss angeschraubt oder angeklebt wird.- Die Aussenfläche des Gehäuses zwischen dem hinteren Deckel und der Gehäusefront, in der die Frontwände der Schieber liegen, ist mit einer Weichstoffhülle aus Polyurethanschaum überzogen, um die Verletzungsgefahr beim Aufprall infolge eines plötzlichen Bremsmanövers oder eines Unfalls zu mildern.

Auf einen Aufprallschutz sollte nicht verzichtet werden. Die Herstellung solcher Weichstoffhüllen ist jedoch schwierig und teuer, da insbesondere das Material selbst bereits kostspielig ist.

Aufgabe der Erfindung ist es, ein gattungsgleiches aufprallgeschütztes Magazin zu schaffen, das einfacher und damit kostengünstiger herstellbar ist und einen verringerten Anteil an teurem Schaumstoffmaterial benötigt.

- 2 -

Die erfindungsgemäss vorgesehene Lösung ergibt sich durch die
im kennzeichnenden Teil des Patentanspruchs 1 genannten Merkmale.

Dabei wurde von der Ueberlegung ausgegangen, dass Verletzungsgefahr hauptsächlich beim Aufschlag auf die scharfen Frontkanten
besteht, also im Grunde nur dort eine Polsterung erforderlich
ist, diese also entsprechend kleiner bemessen werden kann.

Diese Gestaltung ermöglicht darüberhinaus weitere vorteilhafte
Merkmale. So kann man die Baugruppe aus Schiebern, Gehäuse,
Rahmen und Polsterkrone drehbar um eine Achse lagern, die
zumindest nahezu den Schwerpunkt der Baugruppe durchsetzt, da
die Lagern mit geringem Aufwand an den Rahmenseitenteilen vorgesehen werden können; die durch das Eigengewicht auf den Fuss
wirkenden Drehmomente werden dadurch verringert. Für diese
Drehlagerung kann man einen Bügel verwenden, der mit einer
Schnappverbindung am Fuss gehalten ist, bei einem starken Aufprall aber von diesem losreissbar ist; auch dies mindert das
Verletzungsrisiko.- Im übrigen wird auf die Unteransprüche verwiesen.

Bevorzugte Ausführungsbeispiele sind in den beigefügten Zeichnungen dargestellt und werden nachstehend im einzelnen erläutert.

Fig. 1 zeigt in perspektivischer Explosionsdarstellung
ein erstes Ausführungsbeispiel,

Fig. 2 ist eine schematische Seitenansicht zur Erläuterung
der Schwenkbewegung,

Fig. 3 zeigt im Schnitt senkrecht zur Drehachse eine
zweite Ausführungsform, und

Fig. 4 ist eine schematisierte Draufsicht auf den Fuss
gemäss Fig. 3.

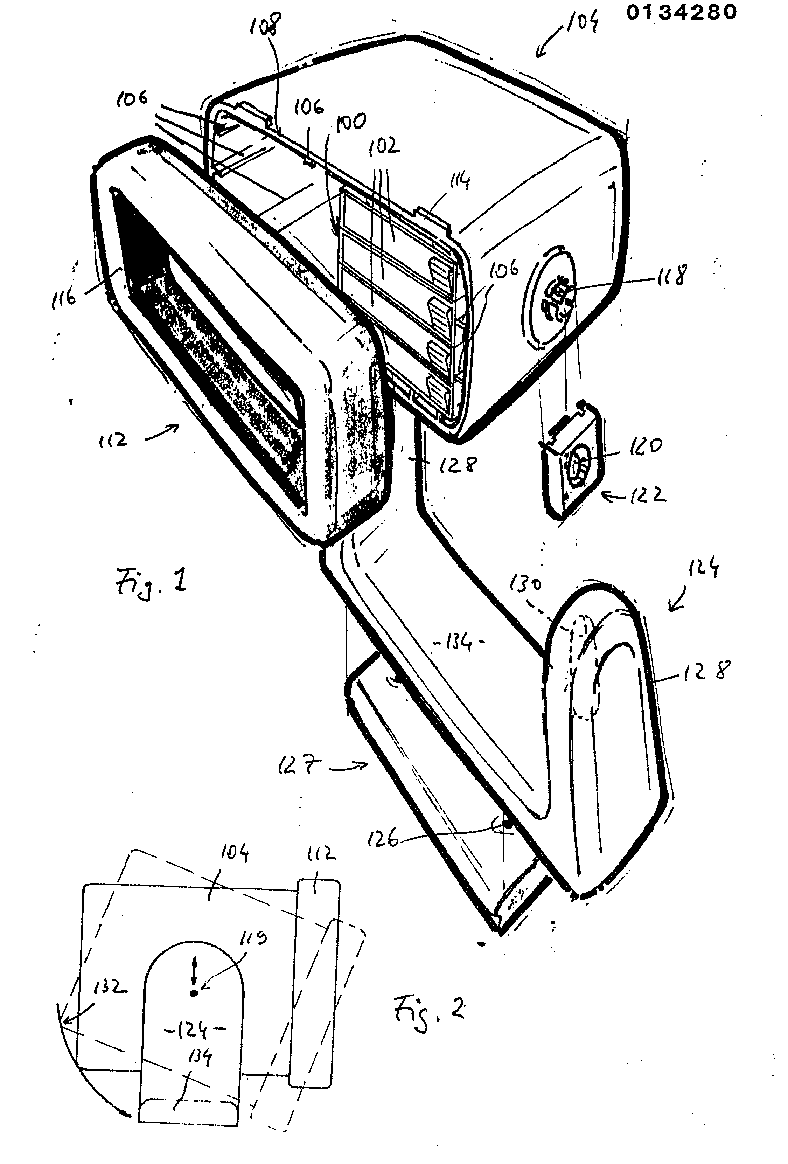

Man erkennt in Fig. 1 ein Halbgehäuse 100 mit vier Schiebern 102, deren Frontwände die offene Frontseite des Halbgehäuses abdecken und die durch Betätigen der seitlichen Tasten auslösbar sind, so dass sie von einer innen untergebrachten Feder ausgeschoben werden können. Neben dem Halbgehäuse findet ein weiteres, gleichartiges Halbgehäuse Platz, das hier nicht gezeichnet ist, um den Innenaufbau des Rahmens 104 besser erkennbar zu machen. Es versteht sich, dass das Gehäuse für die Schieber einteilig oder mehrteilig sein kann, und dass im letzteren Falle die Gehäuseteile miteinander verbunden sein können, aber auch lose neben- oder übereinander in den Rahmen 104 eingefügt werden können.

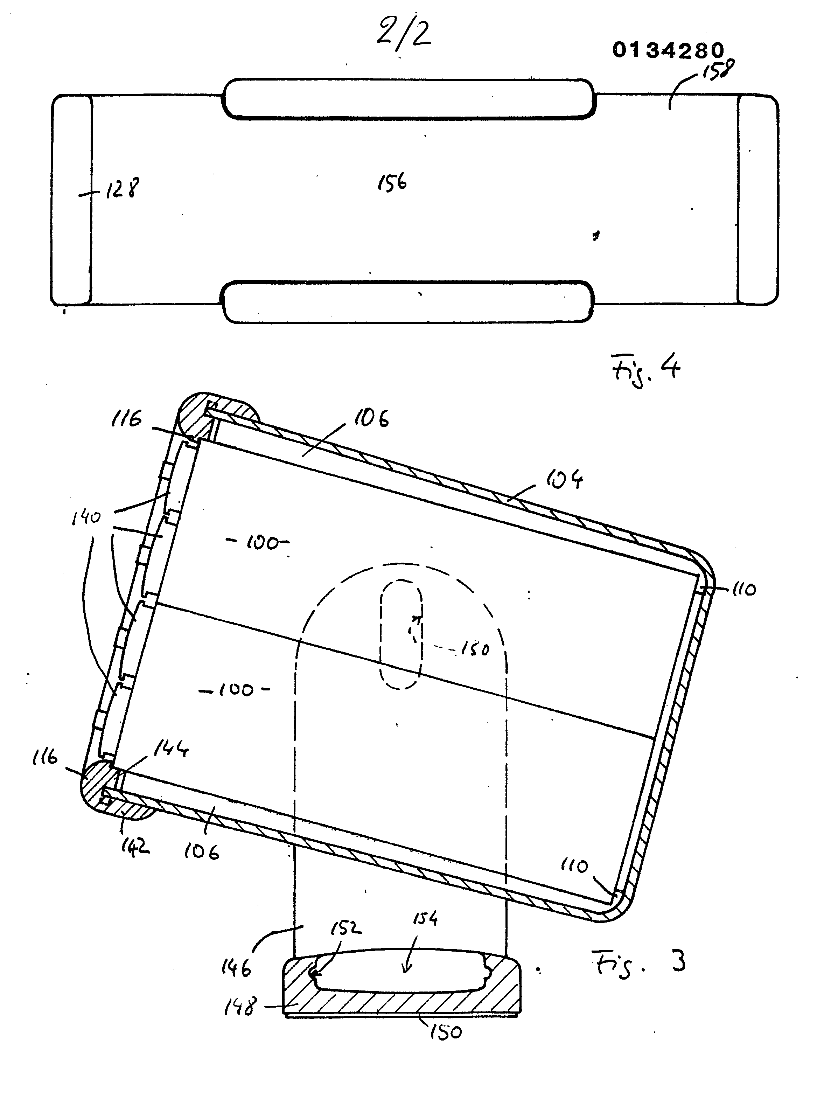

Während das Gehäuse quaderförmige Grundform aufweist, sind die Aussenkonturen des Rahmens 104 sanft konvex abgerundet; damit das Gehäuse trotzdem sicher im Rahmen gehalten ist, sind an diesen entsprechend weit nach innen vorkragende Rippen 106 angeformt, die sich von der frontseitigen Kante 108 senkrecht zu dieser nach innen erstrecken und auch noch mindestens ein gewisses Stück weit längs der geschlossenen Rückwand herumgezogen sind (dies ist nur in Fig. 3 erkennbar, und dort ist das Rippenendstück mit 110 gekennzeichnet). Auf die Rahmenfrontkante wird die Polsterkrone 112 aufgeschoben, die sich an den von der Rahmenfrontkante nach aussen ragenden Lappen 114 verankert. Ihr nach innen einkragender umlaufender Flansch 116 überdeckt den Spalt zwischen dem eingeschobenen Gehäuse 100 und der Rahmenfrontkante, behindert jedoch nicht den Ausschub der Schieber.

Seitlich sind an den Rahmen 104, der aus Hartkunststoff besteht, federnde Nabenteile 118 angespritzt, die in eine entsprechende Rasterung einer Lageröffnung 120 eines Schubsteins 122 greifen, so dass der Rahmen relativ zum Schubstein unter federnder Auslenkung der Nabenteile verdrehbar ist, wobei aber die Nabenteile in den komplementären Rasten des Schubsteins wieder ausfedern und so entsprechende Vorzugsstellungen definieren, in denen keine elastische Deformation vorliegt.

Die Baugruppe, bestehend aus Gehäuse(n), Rahmen, Polsterkrone und Schubsteinen wird von einem Bügel 124 getragen, der im wesentlichen U-förmig ist und mit seiner Basis lösbar in Löcher 126 eines Fusses 127 gesteckt ist, aus denen er bei Gewalteinwirkung herausreissbar ist, während der Fuss am Fahrzeug angeklebt oder angeschraubt bleibt. Die beiden Bügelschenkel 128 sind hohl ausgebildet, und der Hohlraum jedes Schenkels ist als Führung für den Schubstein derart ausgebildet, dass dieser längs des Schenkels verschieblich ist, jedoch reibungsgebremst. Von dem Hohlraum erstreckt sich ein Durchbruch nach innen in Richtung des Rahmens, und dieser Durchbruch hat die Form eines Langlochs 130, durch das hindurch die Nabenteile 118 in die Lageröffnung des Schubsteins einschnappbar sind. Der Schubstein ist vorher in den Hohlraum eingeschoben worden, und zwar von unten, wohin sich der Hohlraum öffnet.

Normalerweise sitzt die Achse 119, die die beiden von den Nabenteilen und Schubstein-Lageröffnungen definierten Lager durchsetzt, in Höhe des basisnäheren Endes des Langlochs 130, und zwar sowohl aus Stabilitäts- als auch aus ästhetischen Gründen. Damit alle denkbaren Montagebedingungen im Fahrzeug erfüllt werden können, muss die erwähnte Baugruppe aber um mindestens 90$^{\circ}$ relativ zum Bügel verschwenkbar sein, und mit der Achse in der erwähnten Position würde die weiteste Auslandung des Rahmens, etwa die Hinterkante 132, beim Verdrehen an der Bügelbasis 134 anstossen. Deshalb kann man dann die Baugruppe längs der Langlöcher 130 nach oben ziehen, die Drehung ausführen und dann wieder nach unten stossen.

Soweit in der zweiten Ausführungsform die Bauteile den zum ersten beschriebenen gleichen, werden dieselben Bezugszeichen verwendet, und es werden nachstehend nur noch Details beziehungsweise Abweichungen von der ersten Ausführungsform beschrieben.

Zunächst ist zu erwähnen, dass die Schieberfrontwände 140 hier ein anderes Profil aufweisen, doch bildet dies keinen Gegenstand der vorliegenden Erfindung. Ferner erkennt man, dass die Polsterkrone 142 nicht nur den Spalt zwischen Rahmen und Gehäuse überdeckt, sondern mit einem Fortsatz 144 in diesen Spalt eingedrückt ist, wobei die Rippen 106 um eine entsprechende Strecke nach innen versetzt enden. Schliesslich ist auch die Schnappverbindung zwischen dem Bügel 146 und dem Fuss 148 abweichend gestaltet: Der Fuss, der auf seiner Unterseite eine Klebefolie 150 trägt, ist auf seiner Oberseite mit einer bei 152 hinterschnittenen Nut 154 versehen, in die ein entsprechend komplementär profilierter Mittelabschnitt 156 der Bügelbasis 158 eingedrückt ist.

Patentansprüche

_____

1)    Magazin für Tonaufzeichnungsträger, wie Compactkassetten, Compactdiscs, Mikrokassetten, das zur Montage in einem Kraftfahrzeug bestimmt ist, mit aus einem im wesentlichen quaderförmigen Gehäuse ausschiebbaren Schiebern zur Aufnahme von jeweils mindestens einem Tonaufzeichnungsträger, einer auf der Gehäuseaussenseite angebrachten Polsterung und einem mit dem Gehäuse lösbar verbundenen, im Fahrzeug befestigbaren Fuss, dadurch gekennzeichnet, dass das Gehäuse in einem Hartstoffrahmen sitzt, gegen diesen mittels an den Rahmen innen angeformten Rippen abgestützt, dass der Hartstoffrahmen mit dem Fuss verbunden ist, und dass die Polsterung als Krone ausgebildet ist, die auf die frontseitige Kante des Rahmens aufgezogen ist und den durch die Rippen definierten Spalt zwischen Rahmen und Gehäuse abdeckt.

2)    Magazin nach Anspruch 1, dadurch gekennzeichnet, dass der Rahmen auf seiner der frontseitigen Kante abgewandten Rückseite geschlossen ist.

3)    Magazin nach Anspruch 1, dadurch gekennzeichnet, dass die Polsterkrone in den Spalt eingeklemmt ist.

4)    Magazin nach Anspruch 3, dadurch gekennzeichnet, dass die Polsterkrone einen von seiner Frontseite abgewandten umlaufenden Schlitz aufweist, der auf die frontseitige Kante des Rahmens aufgeschoben ist.

- 2 -

5) Magazin nach Anspruch 1, dadurch gekennzeichnet, dass der Rahmen mittels eines Bügels, in dem er um eine zur Front parallele Achse drehbar gelagert ist, mit dem Fuss verbunden ist.

6) Magazin nach Anspruch 5, dadurch gekennzeichnet, dass die Achse im wesentlichen durch den Schwerpunkt der im Bügel gelagerten Baugruppe verläuft.

7) Magazin nach Anspruch 5, dadurch gekennzeichnet, dass der Bügel U-Form aufweist mit einer mit dem Fuss verbundenen Basis und Lageraugen für den Rahmen nahe den freien Enden seiner Schenkel.

8) Magazin nach Anspruch 7, dadurch gekennzeichnet, dass der Bügel losreissbar auf den Fuss aufgesteckt ist.

9) Magazin nach Anspruch 7, dadurch gekennzeichnet, dass der Abstand zwischen der dem Rahmen zugewandten Fläche der Basis und der Achse kleiner ist als der Abstand der grössten Ausladung des Rahmens bezüglich der Achse, und dass der Rahmen in Langlöchern der Bügelschenkel gelagert ist, längs denen die Lagerorgane verschieblich sind.

10) Magazin nach Anspruch 9, dadurch gekennzeichnet, dass die Langlöcher als Eintiefungen auf den dem Rahmen zugewandten Innenseiten der Bügelschenkel ausgebildet sind.

11) Magazin nach Anspruch 4, dadurch gekennzeichnet, dass von der Rahmenfrontkante quer nach aussen abstehende Lappen in der Polsterkrone verankert sind.

- 3 -

12)    Magazin nach Anspruch 5, dadurch gekennzeichnet, dass der Rahmen in seiner jeweiligen Drehlage relativ zum Bügel arretierbar ist.

13)    Magazin nach Anspruch 12, dadurch gekennzeichnet, dass der Rahmen in Rastpositionen arretierbar ist.

14)    Magazin nach Anspruch 1, dadurch gekennzeichnet dass der Rahmen und der Fuss aus Hartkunststoff und die Polsterkrone aus Schaumkunststoff bestehen.

15)    Magazin nach Anspruch 5 und 14, dadurch gekennzeichnet, dass der Bügel aus Hartkunststoff besteht.

16)    Magazin nach Anspruch 14, dadurch gekennzeichnet, dass die Polsterkrone aus Polyurethanschaum besteht.

Fig. 1

Fig. 2

0134280

0134280

Fig. 4

Fig. 3

Europäisches
Patentamt

**EUROPÄISCHER RECHERCHENBERICHT**

01342800
Nummer der Anmeldung

EP  83 10 8474

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| A | DE-A-2 757 249  (IDN) <br> * Ansprüche 1-4 * <br><br> --- | 1 | G 11 B  23/02 |
| A | US-A-3 752 551  (J.W. CLARK) <br><br> * Zusammenfassung * <br><br> --- | | |
| A | US-A-4 231 625  (J.L. PEREZ et al.) <br> * Zusammenfassung * <br><br> ----- | | |

|  |
|---|
| RECHERCHIERTE SACHGEBIETE (Int. Cl. ³) |
| G 11 B  23/00 <br> B 60 R   7/00 <br> B 60 R  11/02 <br> B 65 D  85/00 |

Der vorliegende Recherchenbericht wurde für alle Patentansprüche erstellt.

| Recherchenort <br> BERLIN | Abschlußdatum der Recherche <br> 14-03-1984 | Prüfer <br> ROGNONI M.G.L. |
|---|---|---|